# EUROPEAN PATENT APPLICATION

(11) **EP 4 053 403 A1**
(43) Date of publication of application: **07.09.2022**
(21) Application number: 21160467.3
(22) Date of filing: 03.03.2021
(51) Int. Cl.: F03D 13/25, F03D 7/04, F03D 7/02, F03D 13/10

(54) **LAYOUT OF A PLURALITY OF FLOATING WIND TURBINES**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A wind park (100) including a plurality of floating wind turbines (10, 20, 21, 22, 23, 24) comprises:
- at least one bound wind turbine (10) connected to the seabed for defining a position of the bound wind turbine,
- at least one movable wind turbines (20, 21, 22, 23, 24),
- at least one actuator (40, 41, 42, 43, 44, 45, 46, 47, 31, 32, 33, 34) for moving the movable wind turbine (20, 21, 22, 23, 24) with respect to the bound wind turbine (10),
- a controller (110) configured for defining an operating position of the movable wind turbine (20, 21, 22, 23, 24) depending on a production parameter to be optimized, the controller (110) being configured for operating the at least one actuator for moving the movable wind turbine (20, 21, 22, 23, 24) to the operating position.

## Description

### Field of invention

The present invention relates to a wind park including a plurality of floating wind turbines.

### Art Background

It is known to build wind farms having a fixed layout. The turbine locations are optimized in advance of turbine installation for overall highest revenue, meanwhile ensuring that loads are acceptable so that the turbines reach their lifetime. This results in a range of different layouts, which are extremely different.

However, conditions and constraints may change over time, e.g. another wind farm is installed upstream, which leads to suboptimal performance. Wind directions typically change over seasons, so that turbines are more subject to wake in certain seasons and less subject to waked in others. When a change occurs, the original planned layout may not be any more the optimal one, for example in terms of energy production.

Scope of the present invention is therefore to provide a wind farm, which permits reducing the drawbacks deriving from a non-optimized layout of the floating wind turbine.

### Summary of the Invention

This scope may be achieved by the subject matter according to the independent claims. Advantageous embodiments of the present invention are described by the dependent claims. According to a first aspect of the invention, a wind park including a plurality of floating wind turbines is provided. The wind park comprises:
- at least one bound wind turbine connected to the seabed for defining a position of the bound wind turbine,
- at least one movable wind turbine,
- at least one actuator for moving the movable wind turbine with respect to the bound wind turbine,
- a controller configured for defining an operating position of the movable wind turbine depending on a production parameter to be optimized, the controller being configured for operating the at least one actuator for moving the movable wind turbine to the operating position.

According to a second aspect of the invention, a method is provided for controlling the layout of a wind park including a plurality of floating wind turbines. The wind park comprises:
- at least one bound wind turbine connected to the seabed for defining a position of the bound wind turbine,
- at least one movable wind turbines,
- at least one actuator for moving the movable wind turbine with respect to the bound wind turbine.

The method includes the step of:
- defining an operating position of the movable wind turbine depending on a production parameter to be optimized,
- operating the at least one actuator for moving the movable wind turbine to the operating position.

The wind park according to the present invention allows dynamically changing the layout configuration. This permits to increase the overall park efficiency and/or the lifetime of the turbines. A reduction of energy production costs may be also achieved. The layout may be particularly adapted to a changing in the surrounding constraints, e.g. another wind farm is installed upstream, or to seasonal weather conditions, in particular when wind intensities and/or directions change.

The production parameter to be optimized may be any of wake or generated power or expected lifetime of the plurality of floating wind turbines.

The actuator may comprise at least one connecting line connecting two turbines of the wind park, the connecting line having a regulatable length and being capable to resist tensile forces. The connecting line may include one or more ropes or chains.

Alternatively, or additionally, the actuator may comprise at least one propeller. As propeller it may be intended any actuator, which is capable of generating a movement of the wind turbine with respect to the water.

According to embodiments of the present invention, a top view layout of the wind park has a polygonal shape including a plurality of corners, the wind park including a bound wind turbine connected to the seabed at each of said plurality of corners.

According to embodiments of the present invention, the wind park may comprise a position system for measuring the position of the plurality of floating wind turbines and/or a wind sensor for measuring an intensity and/or direction of the wind at the wind park.

The aspects defined above and further aspects of the present invention are apparent from the examples of embodiment to be described hereinafter and are explained with reference to such examples of embodiment. The invention will be described in more detail hereinafter with reference to examples of embodiment but to which the invention is not limited.

### Brief Description of the Drawing

- Figure 1: shows a top view of a first embodiment of a schematic layout of a wind park according to the present invention, which includes a plurality of floating wind turbines.
- Figure 2: shows a top view of a second embodiment of a schematic layout of a wind park according to the present invention, which includes a plurality of floating wind turbines.
- Figure 3: shows the second embodiment of the wind park of figure 2, in a first operative configuration.
- Figure 4: shows the second embodiment of the wind park of figure 2, in a second operative configuration.

### Detailed Description

The drawings are in schematic form. Similar or identical elements are referenced by the same or different reference signs.

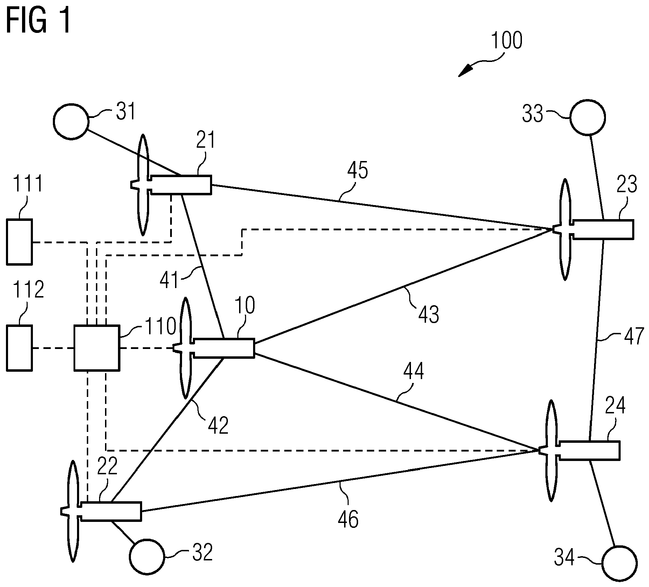

**Figure 1** shows a first embodiment of a wind park 100 including a plurality of floating wind turbines. Figure 1 shows five wind turbines 10, 21, 22, 23, 24. According to other embodiments, a wind park according to the present invention includes two or more floating wind turbines. The wind park 100 comprises a bound wind turbine 10 connected to the seabed for defining a position of the bound wind turbine 10. The bound wind turbine 10 may be anchored to the seabed by means of one or more mooring lines (not shown in figure 1). According to other embodiments of the present invention, the wind park 100 may comprise more than one bound wind turbine 10. The wind park 100 comprises a plurality of movable wind turbines (four movable wind turbines 21, 22, 23, 24 in the embodiment of figure 1. According to other embodiments of the present invention, the wind park 100 may comprise any number of movable wind turbines. The wind park 100 further comprises one or more actuators for moving on or more of the movable wind turbines 21, 22, 23, 24 with respect to the bound wind turbine 10. The actuators may comprise one or more connecting lines 41, 42, 43, 44, 45, 46, 47, each connecting line connecting two turbines of the wind park 100. The connecting lines 41, 42, 43, 44, 45, 46, 47 have a regulatable length and are capable to resist tensile forces. Each connecting line 41, 42, 43, 44, 45, 46, 47 may include one or more ropes or chains. In the embodiment of figure 1, the wind park 100 comprises a plurality of main connecting lines 41, 42, 43, 44 for connecting the bound wind turbine 10 to each of the movable wind turbines 21, 22, 23, 24, and a plurality of secondary connecting lines 45, 46, 47, each secondary connecting line 45, 46, 47 connecting two of the plurality of movable wind turbines 21, 22, 23, 24. According to other embodiments of the present invention, other configurations of connecting lines may be implemented, for example the secondary connecting line 45, 46, 47 may not be present. By changing the lengths of the connecting lines 41, 42, 43, 44, 45, 46, 47 a position of each movable wind turbine 21, 22, 23, 24 may be defined with respect to the bound wind turbine 10. Being the connecting lines 41, 42, 43, 44, 45, 46, 47 capable to resist tensile forces, each length of the connecting lines 41, 42, 43, 44, 45, 46, 47 defines a respective maximum distance between the two respectively connected floating wind turbines. However, any movable wind turbine 21, 22, 23, 24 may be attached to more than one connecting line 41, 42, 43, 44, 45, 46, 47 and therefore a respective plurality of position constraints may be applied to any movable wind turbine 21, 22, 23, 24. The actuators may comprise one or several propellers, for example a plurality of propellers 31, 32, 33, 34, each propeller being associated to a respective movable wind turbine 21, 22, 23, 24 for changing the position of the respective movable wind turbine with respect to the bound wind turbine 10. According to embodiments of the present invention, the propellers 31, 32, 33, 34 are not present. According to embodiments of the present invention, the propellers 31, 32, 33, 34 are used alternatively to the connecting lines 41, 42, 43, 44, 45, 46, 47. According to other embodiments of the present invention, the propellers 31, 32, 33, 34 are used together to the connecting lines 41, 42, 43, 44, 45, 46, 47.

The wind park 100 further comprises a controller 110 configured for defining an operating position of the movable wind turbines 21, 22, 23, 24 as a function of a production parameter of the wind park to be optimized. The controller 110 is configured for operating the actuators 41, 42, 43, 44, 45, 46, 47, 31, 32, 33, 34 for moving the movable wind turbines 21, 22, 23, 24 to the desired operating position. The controller 110 may be centralized or distributed between the wind turbines 10, 21, 22, 23, 24 of the wind park 100. The production parameter of the wind park to be optimized may be the wake produced by each wind turbine of the wind park 100 or the power generated by the wind park 100 or lifetime of the wind turbines of the wind park 100. The downtime cost of moving movable wind turbines 21, 22, 23, 24, for example the consumption of the motors 31, 32, 33, 34 or the energy required to change the length of the connecting lines 41, 42, 43, 44, 45, 46, 47, may be considered. The definition of the site layout can be derived from simulation programs and/or by analyzing the production data of the turbines. The controller 110 may be associated with a position system 111 for measuring the position of the plurality of floating wind turbines 10, 21, 22, 23, 24. The controller 110 may be associated with one or more wind sensors 112 for measuring an intensity and/or direction of the wind at the wind park 100.

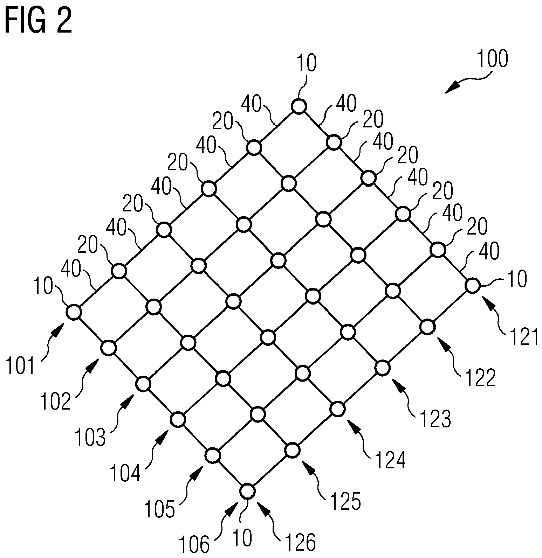

**Figures 2** to **4** show a second embodiment of a wind park 100 including a plurality of floating wind turbines disposed according to a layout having a polygonal shape including a plurality of sides and corners (four sides and four corners are shown in figures 2 to 4). According to other embodiments of the present invention, the layout may have a polygonal shape with a different number of sides and corners. The sides may be rectilinear or curved. Each corner of the layout includes a bound wind turbine 10 connected to the seabed for defining a position of the bound wind turbine 10. The bound wind turbine 10 may be anchored to the seabed by means of one or more mooring lines (not shown in figures 2 to 4). According to other embodiments of the present invention, the layout may include bound wind turbines 10 only at some of the corners, for example only at two of the corners. The layout may have a plurality of movable wind turbines 20 arranged in a matrix configuration including a plurality rows and column (six rows 101, 102, 103, 104, 105, 106 and six columns 121, 122, 123, 124, 125, 126 are shown figures 2 to 4). In each row 101, 102, 103, 104, 105, 106 and columns 121, 122, 123, 124, 125, 126 the respective movable wind turbines 20 are connected in series by a plurality of connecting lines 40, each connecting lines linking two adjacent movable wind turbines 20. Additionally, or alternatively diagonal connections between turbines may be provided. Additionally, or alternatively, any of the movable wind turbines 20 may include a propeller (not shown in figures 2 to 4).

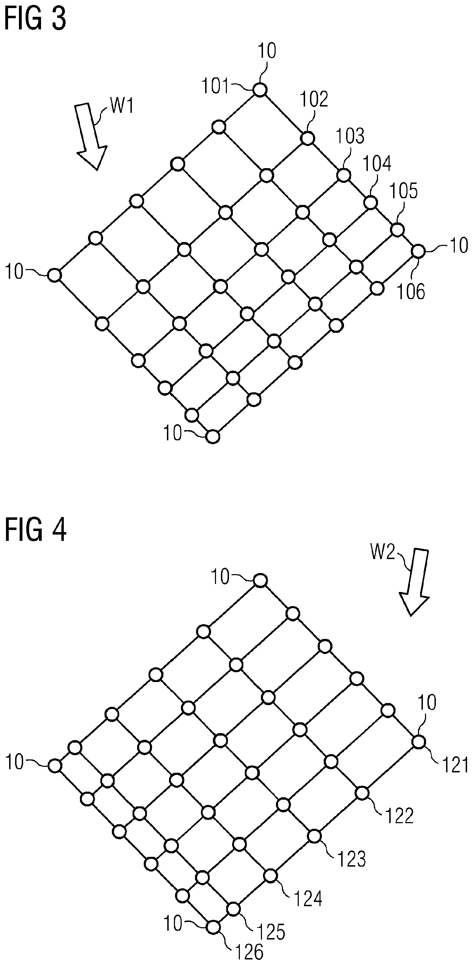

In a first operating condition (figure 3), where the wind is oriented according to a first direction W1 from the first row 101 to the last row 106 of the wind park 100. In such operating condition, controller 110 is configured for operating the connecting lines 40 for changing the distance between adjacent rows 101, 102, 103, 104, 105, 106 of floating wind turbine, in order to minimize wake. The distance between the first row 101 and the second row 102 (upwind rows) is increased, while the mutual distances between the last rows 105, 106 (downwind rows) is reduced.

In a second operating condition (figure 4), where the wind is oriented according to a first direction W2 from the first column 121 to the last column 126 of the wind park 100. In such operating condition, controller 110 is configured for operating the connecting lines 40 for changing the distance between adjacent columns 121, 122, 123, 124, 125, 126 of floating wind turbine, in order to minimize wake. The distance between the column row 121 and the second column 122 (upwind columns) is increased, while the mutual distances between the last columns 125, 126 (downwind columns) is reduced. This prevents that the wake generated from one upstream wind turbine interferes with the energy production of a downstream wind turbine. According to other operating conditions (not shown) the distances between adjacent floating wind turbines may be changed according to other layouts, in particular on the position of one floating wind turbine may be changed individually and independently from the other wind turbines in a same row or column, for example depending on the overall wake conditions before and after the layout change.

## Claims

1. A wind park (100) including a plurality of floating wind turbines (10, 20, 21, 22, 23, 24) comprising:
- at least one bound wind turbine (10) connected to the seabed for defining a position of the bound wind turbine,
- at least one movable wind turbines (20, 21, 22, 23, 24),
- at least one actuator (40, 41, 42, 43, 44, 45, 46, 47, 31, 32, 33, 34) for moving the movable wind turbine (20, 21, 22, 23, 24) with respect to the bound wind turbine (10),
- a controller (110) configured for defining an operating position of the movable wind turbine (20, 21, 22, 23, 24) depending on a production parameter to be optimized, the controller (110) being configured for operating the at least one actuator for moving the movable wind turbine (20, 21, 22, 23, 24) to the operating position.

2. The wind park (100) according to claim 1, wherein the actuator comprises at least one connecting line (40, 41, 42, 43, 44, 45, 46, 47) connecting two turbines of the wind park (100), the connecting line having a regulatable length and being capable to resist tensile forces.

3. The wind park (100) according to claim 2, wherein the actuator (40, 41, 42, 43, 44, 45, 46, 47) comprises a rope or chain.

4. The wind park (100) according to any of the previous claims, wherein the actuator comprises at least one propeller (31, 32, 33, 34).

5. The wind park (100) according to any of the previous claims, wherein a top view layout of the wind park has a polygonal shape including a plurality of corners, the wind park (100) including a bound wind turbine (10) connected to the seabed at each of said plurality of corners.

6. The wind park (100) according to any of the previous claims, wherein the wind park (100) comprises a position system (111) for measuring the position of the plurality of floating wind turbines.

7. The wind park (100) according to any of the previous claims, wherein the wind park (100) comprises a wind sensor (112) for measuring an intensity and/or direction of the wind at the wind park.

8. A method for controlling the layout of a wind park (100) including a plurality of floating wind turbines comprising:
- at least one bound wind turbine (10) connected to the seabed for defining a position of the bound wind turbine,
- at least one movable wind turbines (20, 21, 22, 23, 24),
- at least one actuator (40, 41, 42, 43, 44, 45, 46, 47, 31, 32, 33, 34) for moving the movable wind turbine (20, 21, 22, 23, 24) with respect to the bound wind turbine (10),
the method including the step of:
- defining an operating position of the movable wind turbine (20, 21, 22, 23, 24) depending on a production parameter of the wind park to be optimized,
- operating the at least one actuator for moving the movable wind turbine (20, 21, 22, 23, 24) to the operating position.

9. The method according to claim 8, wherein the production parameter to be optimized is wake and/or generated power and/or expected lifetime of the plurality of floating wind turbines.
